(19) Europäisches Patentamt
European Patent Office
Office européen des brevets

(11) EP 1 772 473 B1

(12) **EUROPEAN PATENT SPECIFICATION**

(45) Date of publication and mention of the grant of the patent:
**27.03.2013 Bulletin 2013/13**

(21) Application number: **05753427.3**

(22) Date of filing: **16.06.2005**

(51) Int Cl.:
***C08G 59/06*** *(2006.01)*

(86) International application number:
**PCT/JP2005/011484**

(87) International publication number:
**WO 2005/123799 (29.12.2005 Gazette 2005/52)**

(54) **EPOXY RESIN, METHOD FOR PRODUCING SAME AND EPOXY RESIN COMPOSITION THEREOF**

EPOXIDHARZ, HERSTELLUNGSVERFAHREN DAFÜR UND EPOXIDHARZZUSAMMENSETZUNG DAVON

RÉSINE ÉPOXYDE, MÉTHODE POUR LA PRODUIRE, ET COMPOSITION DE CETTE RÉSINE ÉPOXYDE

(84) Designated Contracting States:
**AT BE BG CH CY CZ DE DK EE ES FI FR GB GR HU IE IS IT LI LT LU MC NL PL PT RO SE SI SK TR**

(30) Priority: **17.06.2004 JP 2004179177**

(43) Date of publication of application:
**11.04.2007 Bulletin 2007/15**

(73) Proprietor: **Kukdo Chemical Co., Ltd.**
**Seoul 153-023 (KR)**

(72) Inventors:
- **HANAFUSA, Masayoshi,**
**Epoxy Resin Develop. Center**
**Sodegaura-shi, Chiba 299-0266 (JP)**
- **SHINOHARA, Shuya,**
**Epoxy Resin Development Center**
**Higashinada-ku,**
**Kobe-shi, Hyogo 658-0042 (JP)**

(74) Representative: **Beck, Michael Rudolf**
**Beck & Rössig**
**European Patent Attorneys**
**Cuvilliésstrasse 14**
**81679 München (DE)**

(56) References cited:
**EP-A- 0 579 301**
**JP-A- 2002 338 657**
**JP-A- 2003 342 350**
**US-A- 4 017 523**
**US-A- 6 046 284**

EP 1 772 473 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The present invention relates to an epoxy resin which contains properly phenolic hydroxyl group and a method for production of said epoxy resin, further relates to an epoxy resin composition containing said epoxy resin. More in detail, the present invention relates to a thermosetting epoxy resin which indicates thermosetting property mainly based on a reaction between an intramolecular epoxy group and a phenolic hydroxyl group characterized by further improving chemical and physical characteristics which conventional epoxy resin cured product has, and a method for production of said epoxy resin, further relates to an epoxy resin composition containing said epoxy resin.

DESCRIPTION OF THE PRIOR ART

Epoxy resin is widely used for various uses such as coating, electrical use, civil engineering use or adhesive because of its excellent chemical and physical characteristics. For example, in a coating field, excellent adhesion with a coated product, corrosion resistance, toughness and impact resistance are required, however, in combination of a conventional epoxy resin with a public known curing agent, for example, dicyandiamide, hydrazide such as dihydrazide adipate, acid anhydride, dibasic acid or polyester with acid end has a limitation when used in severe environment, such as under ground laid gas transporting pipe, epoxy coated iron code or iron wire which is required to be bended after coated or under surface use for car. As a composition to endure such a requirement, a composition prepared by blending bisphenol A phenolic curing agent to bisphenol A epoxy resin is disclosed in Patent Document A, and said composition is characterized to improve its property remarkably so as to be used to outer surface coating of a pipe. As such phenolic curing agent, a compound which is prepared by reacting stoichiometric excess bisphenol A to an epoxy resin having relatively lower molecular weight can be mentioned, and for example, "EPOTOHTO ZX-767" or "EPOTOHTO ZX-798P" which are products of Tohto Kasei Co., Ltd., "EPICURE-171" which is a product of Japan Epoxy Resin Co., Ltd., or "DEH-81" which is a product of Dow Chemical Co., Ltd., are on the market. Although these compounds are industrially useful phenolic curing agents, however, it is necessary to produce epoxy resin and phenolic curing agent separately and to control their quality respectively. Further, in the production of cured composition using these compounds, mixing process of these components is necessary, and according to a mixing method, uniform composition can not be expected and sometimes cured product having desired characteristic can not be obtained. Especially, in a case of production of powder coating, an epoxy resin and a curing agent such as phenolic curing agent, wherein molecular weight and softening point of these compounds are different, are blended and becomes apparently uniform by melting and kneading process, however, obtained powder coating is sometimes uneven in mixing of epoxy resin and curing agent, and defects of coated film caused by said uneven mixing condition are observed, that is, properties such as corrosion resistance, impact resistance or flexibility are not performed. As a countermeasure to avoid above mentioned phenomenon, a method to melt and knead the mixture again and to mix the epoxy resin and the curing agent more uniformly is carried out. However, said multiple melting and kneading process is not desirable, because partially gel product is formed and is not desirable. Further, since producing process becomes complicated, said method is disadvantageous from industrial view point. Therefore, development of a composition which contains an epoxy resin and a curing agent uniformly by molecular level is desired.

In the meanwhile, as a resin which contains an epoxy resin and a phenolic hydroxide group uniformly by molecular level, a method to obtain a composition by polyaddition reaction of epoxy resin of lower molecular weight with bisphenol under the presence of alkali metal catalyst is proposed in Patent Document 2. However, in this method, alkali metal catalyst can not be removed from the product, accordingly has a problem in preservative stability of resin. Further, in this method, since controlling of end point of reaction is difficult, it is difficult to obtain same quality resin stable. Furthermore, this method is characterized to produce epoxy resin of lower molecular weight as the first step, then react said resin with bisphenol, and differs from the present invention which is characterized to be synthesized directly from divalent phenol and epihalohydrine. Still further, process of said method of Patent Document 2 is complicated and is disadvantageous from industrial view point.

Patent Document 1: JPA S54-7437 publication
Patent Document 2: JP 2654796 publication

Accordingly, the object of the present invention is to make contain component of curing agent, in particular, phenolic curing agent component by molecular level in epoxy resin. More in detail, the object of the present invention is to provide curable resin possessing an epoxy group, which is synthesized directly from divalent phenol and epihalohydrine, and phenolic hydroxyl group, and to provide a method for production of same, further to provide epoxy resin composition thereof.

BRIEF DESCRIPTION OF DRAWINGS

Fig.1 is HPLC chart of epoxy resin (B) obtained in Example 2, Fig.2 is HPLC chart of epoxy resin; EPOTOHTO YD-014 of Comparative Example 2, Fig.3 is FD-MS spectrum of Epoxy resin (B) obtained in Example 2, FIG.4 is FD-MS spectrum of epoxy resin; EPOTOHTO YD-014 of Comparative Example 2, abscissa of Figs. 1 and 2 indicates elusion time and ordinate indicates absorbancy. Abscissa of Figs. 3 and 4 indicates mass number m/z and ordinate indicates intensity of peak. Further, a group, b group and c group mentioned in Figs. 3 and 4 indicate that $A_1$ and $A_2$ in general formula ( I ) are residue from which hydroxyl group of bisphenol A is removed,
in a group, both $R_1$ and $R_2$ are

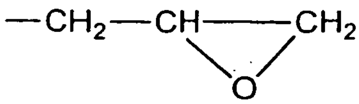

in b group, both $R_1$ and $R_2$ are H (hydrogen atom). in c group, one of $R_1$ or $R_2$ is

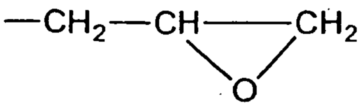

and another one is H (hydrogen atom).

DISCLOSURE OF THE INVENTION

The essential point of the present invention is epoxy resin represented by following general formula ( I ), which is synthesized from divalent phenol and epihalohydrine, and satisfies numerical formula (1) mentioned below, further, amount of hydrolytic halogen is 0.05 wt.% or less, and a method for production of same and epoxy resin composition thereof.

**General formula ( I )**

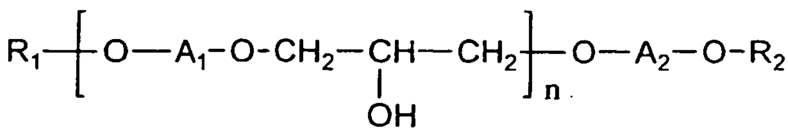

Wherein n is a integer of 0 or more.
$A_1$ and $A_2$ are residue of divalent phenol, and $A_1$ and $A_2$ can be same or can be different.
both $R_1$ and $R_2$ are H or

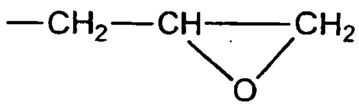

Numerical formula (1) $0.3 \leqq X/Y \leqq 2.0$

wherein,

X: epoxy equivalent (g/eq)
Y: phenolic hydroxyl group equivalent (g/eq)

DESCRIPTION OF THE PREFERRED EMBODIMENT

As a method for production of epoxy resin which possesses both epoxy group and phenolic hydroxyl group of the present invention, a method to react 0.8 to 1.3 mole of epihalohydrin to 1 mole of divalent phenol under the presence of metal hydroxide can be mentioned. As a divalent phenol, bisphenol A, bisphenol F, bisphenol S, tetrabromobisphenol A, bisphenol AD, bisphenol C, catechol, resorcin, hydroquinone or mixture thereof can be mentioned, and among these compounds bisphenols is desirable. As epihalohydrin, epichlorohydrin, epiiodohydrin, epibromohydrin, methylepichlorohydrin, methyl epibromohydrin or methylepiiodohydrin can be mentioned, and among these compounds epichlorohydrin is desirable.

Reaction between divalent phenol and epihalohydrin is carried out in the range of 0.8 to 1.3 mole of epihalohydrin to 1 mole of divalent phenol, desirably in the range of 0.8 to 1.2 mole of epihalohydrin to 1 mole of divalent phenol, more desirably in the range of 0.9 to 1.1 mole of epihalohydrin to 1 mole of divalent phenol. When epihalohydrin is smaller than 0.8 mole, amount of phenolic hydroxyl group in obtained epoxy resin becomes larger than necessary amount and curability is remarkably deteriorated, therefore is not desirable. That is, value of numerical formula (1) exceeds upper limit 2.0 and curability is remarkably deteriorated, therefore, is not desirable. Further, when epihalohydrin is larger than 1.3 mole, amount of phenolic hydroxyl group in obtained epoxy resin becomes too small and curability is also remarkably deteriorated, therefore, is not desirable. As an alkali metal hydroxide to be existed at the reaction of epihalohydrin with divalent phenol, sodium hydroxide, potassium hydroxide, lithium hydroxide or mixture thereof can be mentioned, and it is desirable to be used as aqueous solution, further aqueous solution of sodium hydroxide is more desirable.

Total amount of alkali metal hydroxide that is used at reaction and refining process is desirably 0.98-1.05 mole to 1 mole of epihalohydrin. More desirably, is 1.00-1.03 mole. When total amount of alkali metal hydroxide is smaller than 0.98 mole, reaction between divalent phenol and epihalohydrin does not progress easily and large amount of hydrolytic halogen remains, while, when total amount of alkali metal hydroxide exceeds 1.05 mole, high molecular weight compound is formed and controlling of reaction becomes difficult.

Reaction between epihalohydrin and divalent phenol can be carried out in solvent which does not react with epoxy group, specifically, aromatic hydro carbons such as toluene, xylene or benzene, ketones such as methylisobuthyl ketone, methylethyl ketone, cyclohexanone or acetone, alcohols such as propanol or buthanol, glycolethers such as diethyleneglycolmethylether, propyleneglycolmethylether or dipropyleneglycolmethylether, aliphaticethers such as diethylether, dibutylether or ethylpropylether, alicyclicethers such as dioxane or tetrahydrofurane can be mentioned, and these compounds can be used or can be used by mixing. During the reaction, weight parts of these solvents is 10-200 weight parts to 100 weight parts of divalent phenol, desirably 50-100 weight parts to 100 weight parts of divalent phenol.

Reaction can be carried out as follows. That is, divalent phenol, epihalohydrine and solvent are contained in a reactor vessel and dissolved, then reacted by dropping aqueous solution of alkali metal hydroxide under atmospheric pressure at 70-100 °C for 30 minutes to 4 hours. At the reaction, aqueous solution of alkali metal hydroxide can be dropped continuously or can be dropped divisionally. Further, a method which drops epihalohydrine after divalentphenol is dissolved in aqueous solution of alkali metal hydroxide and in solvent, can be used, and also this method can be carried out under atmospheric pressure at 70-100°C for 30 minutes to 4 hours. When the reaction temperature is lower than 70°C, progress of reaction becomes not easy, while, when the reaction temperature exceeds 100°C, there is a dangerous possibility that epihalohydrine distil out to the outside, and is not preferable. Thus the reaction can be ended, however, in a case that the amount of hydrolytic halogen is too much, refined epoxy resin of the present invention can be obtained by following process. That is, after alkali metal hydroxide is added in above mentioned maximum amount so as to carry out re-ring-closing reaction at 60-90 °C for 10 minutes to 2 hours, remove excess alkali metal hydroxide or by-product salt by neutralization or washing by water, then remove solvent by vacuum distillation.

Properties of epoxy resin of the present invention which is obtained as above is desirably characterized as to be X/Y is 0.3 or more and 2.0 or less. More desirably, is to be 0.3 or more and 2.0 or less. Furthermore desirably, is to be 0.5 or more and 1.5 or less. When X/Y is smaller than 0.3, amount of phenolic hydroxyl group to epoxy group is very few, and is not desirable because curing tendency is deteriorated. When X/Y exceeds 2.0, amount of phenolic hydroxyl group to epoxy group is surplus, and is not desirable because curing tendency is also deteriorated. Further, content of hydrolytic halogen is desirably 0.05 weight% or less. When the content of hydrolytic halogen is over than 0.05 weight%, curing reaction is prevented in a case of composition which uses a basic curing accelerator and consequently properties of cured product is deteriorated and therefore is not desirable. Still further, it is desirable that epoxy equivalent is 3000g/eq or less and phenolic hydroxyl group equivalent is 5000g/eq or less. More desirably, epoxy equivalent is 2500g/eq or less and phenolic hydroxyl group equivalent is 3000g/eq or less. When epoxy equivalent is larger than 3000g/eq and phenolic hydroxyl group equivalent is 5000g/eq, molecular weight becomes too high and is difficult to produce or density of epoxy group and phenolic hydroxyl group becomes to small and properties of cured product is deteriorated and therefore is not desirable.

Numerical formula (1)

$$0.3 \leqq X/Y \leqq 2.0$$

wherein,

X: epoxy equivalent (g/eq)
Y: phenolic hydroxyl group equivalent (g/eq)

Epoxy resin composition of the present invention is the epoxy resin composition whose essential component is epoxy resin of the present invention. Epoxy resin of the present invention forms a curable composition by only blending a curing accelerator same as used in a conventional epoxy resin composition without using a curing agent. As a curing accelerator, a curing accelerator which is generally used in a curable composition of epoxy resin is usable, for example, amines such as diethylenetriamine, trietylenetetramine, isophoronediamine, methaxylenediamine or diaminodiphenylmethane, imidazoles such as 2-methylimidazole or 2-ethyl-4methylimidazole, imidazolines such as 2-methylimidazoline or 2-ethyl-4-methylimidazoline, various salts such as triazine salt, cyanoethyl salts or cyanoethyl trimellitate of imidazole compounds, metallic compounds such as sodium acetate, quaternary ammonium salt such as tetraethylammoniumchloride, amide compounds or organic phosphorus compounds such as triphenylphosphine can be mentioned. Blending ratio of these is 0.01-5 weight parts desirably 0.1-2 weight parts to 100 weight parts of epoxy resin of the present invention.

To the epoxy resin composition of the present invention, conventional epoxy resins or curing agents can be blended besides above mentioned curing accelerators if necessary. As an epoxy resin, for example, diglycidilethers of bisphenol such as bisphenol A or bisphenol F, novolac polyglycidilethers such as phenol novolac or cresol novolac, polyglycidilester such as hexahydrophthalic acid or dimeric acid, polyglycidilethers of alcohols such as polyethylene glycol or polypropylene glycol, polyglycidilamines such as diaminodiphenylmethane or alycyclic epoxy resin can be mentioned. These compounds can be used alone or can be used by mixing. As a curing agent, a compound which is generally used as a curing agent for epoxy resin can be used. For example, amines such as diethylenetriamine, toriethylenetetramine, isophoronediamine, metaxylenediamine or diaminodiphenylmethane, acid anhydride such as phthalic anhydride, hexahydrophthalic anhydride, nadic anhydride or torimellic anhydride, polyester resin with acid functional end group, polyaminoamide resin which is a condensation product of dimeric acid with diethylenetriamine or triethylamine, polysulfide resin having mercaptan group at an end, boron trifluoride complex, novolac resin obtained by condensation reaction of phenols and formalin, various compounds possessing phenolic hydroxyl group, organic acid dihydrazide such as dihydrazide sebacate, polyisocyanates, resolphenolic resin or amine resin can be mentioned. These compounds can be used alone or can be used by mixing.

To the epoxy resin composition of the present invention, filler, pigment, diluent or other reforming agent can be used if necessary. The epoxy resin compound of the present invention is fitted to an use for a coating such as anticorrosion coating, powder coating, PCM coating or can coating, an use for construction, an use for an adhesive, an use for an electrical insulator, an use for an electric or electronic parts such as virtual fixing agent for a semi conductor chip or an use for various composite materials such as laminated board (printed circuit board) or carbon fiber reinforced plastic (CFRP).

EXAMPLES

The present invention will be illustrated more in detail according to following Examples, however, not intending to restrict the scope of claims by Examples. In Examples and Comparative Examples, parts for blending of each component indicates weight parts.

Epoxy equivalent is measured by a method prescribed in JIS K-7236.

Phenolic hydroxyl group equivalent is measured by following method. In mixed solution of 96 weight % of tetrahydrofuran and 4 weight % of methanol, tetramethylammoniumhydroxide is acted to phenolic hydroxyl group and develop color and absorbance at 305nm wavelength is measured using a spectrophotometer. Phenolic hydroxyl group equivalent is calculated using a calibration curve which was previously prepared by using divalent phenol, which is used as a starting material, as a standard component by same procedure.

Amount of hydrolytic chlorine is measured by following method. Approximately 2g of specimen is weighted and placed into a conical flask, then dissolved in dioxane, after that, 25ml of 0.1N-KOH methanol solution is added and reacted in warm water of 70°C for 30 minutes. Then the contents is transported to 200ml beaker and acetone, DI water, 3ml of acetic acid are added. After that, amount of hydrolytic chlorine is measured by potentiometric titration using 0.01N-$AgNO_3$ aqueous solution.

Example 1

To a reactor to which a stirrer, a thermometer, a nitrogen blowing tube and a cooling tube are equipped, 228 parts (1.0 mole) of bisphenol A as divalent phenol, 102 parts (1.1 mole) of epichlorohydrine and 200 parts of methylisobutyl ketone are added and dissolved at 40°C, then 148 parts (1.11 mole) of 30% NaOH aqueous solution is dropped by 1 hour, then reacted at 90°C for 3 hours. After that, 350 parts of methylisobutylketon and 200 parts of water are added and dissolved, then the reactor is stood and water layer is removed. Neutralized by phosphoric acid, washed by water and water layer is removed. Further, washed by water and is filtrated and methylisobutyl ketone is distilled off, then epoxy resin (A) of the present invention is obtained. The obtained resin is analyzed, and results indicate that epoxy equivalent is 990g/eq, phenolic hydroxyl group equivalent is 1600g/eq, and amount of hydrolytic chlorine is 0.01%. Properties are summarized in Table 1.

Example 2

To the same reactor used in Example 1, 228 parts (1.0 mole) of bisphenol A as divalent phenol, 97 parts (1.05 mole) of epichlorohydrine and 200 parts of methylisobutyl ketone are added and dissolved at 40°C, then 25 parts (0.30 mole) of 48.5% NaOH aqueous solution is dropped by 1 hour, then preliminary reaction is carried out at 90°C for 3 hours. Further, 57 parts (0.69 mole) of 48.5% NaOH aqueous solution is dropped by 1 hour, then reacted at 90 °C for 3 hours. After that, 350 parts of methylisobutylketon and 250 parts of water are added and dissolved, then the reactor is stood and water layer is removed. 4.1 parts (0.05 mole) of 48.5% NaOH aqueous solution is further dropped and reacted at 80°C for 1 hour. Neutralized by phosphoric acid, washed by water and water layer is removed. After washed by water again and filtrated, methylisobutyl ketone is distilled off. Thus epoxy resin (B) of the present invention is obtained. Properties are summarized in Table 1.

Example 3

To the same reactor used in Example 1, 228 parts (1.0 mole) of bisphenol A as divalent phenol, 95 parts (1.03 mole) of epichlorohydrine and 200 parts of methylisobutyl ketone are added and dissolved at 40°C, then 25 parts (0.30 mole) of 48.5% NaOH aqueous solution is dropped by 1 hour, then preliminary reaction is carried out at 70°C for 1 hour. Further, 60 parts (0.73 mole) of 48.5% NaOH aqueous solution is dropped by 1 hour, then reacted at 90 °C for 3 hours. After that, 350 parts of methylisobutylketon and 250 parts of water are added and dissolved, then the reactor is stood and water layer is removed. 0.8 parts (0.01 mole) of 48.5% NaOH aqueous solution is further dropped and reacted at 80°C for 1 hour. Neutralized by phosphoric acid, washed by water and water layer is removed. After washed by water again and filtrated, methylisobutyl ketone is distilled off. Thus epoxy resin (C) of the present invention is obtained. Properties are summarized in Table 1.

Example 4

To the same reactor used in Example 1, 200 parts (1.0 mole) of bisphenol F as divalent phenol, 97 parts (1.05 mole) of epichlorohydrine and 200 parts of methylisobutyl ketone are added and dissolved at 40°C, then 25 parts (0.30 mole) of 48.5% NaOH aqueous solution is dropped by 30 minutes, then preliminary reaction is carried out at 70°C for 1 hour. Further, 57 parts (0.69 mole) of 48.5% NaOH aqueous solution is dropped by 1 hour, then reacted at 90°C for 3 hours. After that, 350 parts of methylisobutylketon and 250 parts of water are added and dissolved, then the reactor is stood and water layer is removed. 4.1 parts (0.05 mole) of 48.5% NaOH aqueous solution is further dropped and reacted at 80°C for 1 hour. Neutralized by phosphoric acid, washed by water and water layer is removed. After washed by water again and filtrated, methylisobutyl ketone is distilled off. Thus epoxy resin (D) of the present invention is obtained. Properties are summarized in Table 1.

Example 5

To the same reactor used in Example 1, 228 parts (1.0 mole) of bisphenol A as divalent phenol, 88 parts (0.95 mole) of epichlorohydrine and 200 parts of methylisobutyl ketone are added and dissolved at 40°C, then 16.5 parts (0.20 mole) of 48.5% NaOH aqueous solution is dropped by 30 minutes, then preliminary reaction is carried out at 70°C for 1 hour. Further, 61.0 parts (0.74 mole) of 48.5% NaOH aqueous solution is dropped by 1 hour, then reacted at 90°C for 3 hours. After that, 350 parts of methylisobutylketon and 250 parts of water are added and dissolved, then the reactor is stood and water layer is removed. 1.6 parts (0.02 mole) of 48.5% NaOH aqueous solution is further dropped and reacted at 80°C for 1 hour. Neutralized by phosphoric acid, washed by water and water layer is removed. After washed by water again and filtrated, methylisobutyl ketone is distilled off. Thus epoxy resin (E) of the present invention is obtained.

Properties are summarized in Table 1.

Comparative Example 1

To the same reactor used in Example 1, 228 parts (1.0 mole) of bisphenol A as divalent phenol, 102 parts (1.1 mole) of epichlorohydrine and 200 parts of methylisobutyl ketone are added and dissolved at 40°C, then 157 parts (1.18 mole) of 30% NaOH aqueous solution is dropped by 1 hour, then reacted at 90 °C for 3 hours. After that, 350 parts of methylisobutyl keton and 200 parts of water are added and dissolved, then the reactor is stood and water layer is removed. Neutralized by phosphoric acid, washed by water and water layer is removed. After washed by water again and filtrated, methylisobutyl ketone is distilled off. Thus epoxy resin (F) is obtained. The obtained resin is analyzed, and results indicate that epoxy equivalent is 1750g/eq, phenolic hydroxyl group equivalent is 7000g/eq, and amount of hydrolytic chlorine is 0.003 wt%.

Comparative Example 2

To the same reactor used in Example 1, 228 parts (1.0 mole) of bisphenol A as divalent phenol, 97 parts (1.05 mole) of epichlorohydrine and 200 parts of methylisobutyl ketone are added and dissolved at 40°C, then 25 parts (0.30 mole) of 48.5% NaOH aqueous solution is dropped by 30 minutes, then preliminary reaction is carried out at 70°C for 1 hour. Further, 57 parts (0.70 mole) of 48.5% NaOH aqueous solution is dropped by 1 hour, then reacted at 90°C for 3 hours. After that, 350 parts of methylisobutylketon and 250 parts of water are added and dissolved, then the reactor is stood and water layer is removed. Neutralized by phosphoric acid, washed by water and water layer is removed. After washed by water again and filtrated, methylisobutyl ketone is distilled off. Thus epoxy resin (G) is obtained. The obtained resin is analyzed, and results indicate that epoxy equivalent is 1100g/eq, phenolic hydroxyl group equivalent is 1200g/eq, and amount of hydrolytic chlorine is 0.20 wt%.

Comparative Example 3

Properties of conventional epoxy resin: EPOTOHTO YD-014 (product of Tohto Kasei Co., Ltd.) on the market, which is produced by a conventional direct synthesis of bisphenol A with epichlorohydrine, are summarized in Table 1.

Comparative Example 4

Properties of phenolic curing agent: EPOTOHTO ZX-767 (product of Tohto Kasei Co., Ltd.) on the market, which is produced by an indirect synthesis of bisphenol A liquid epoxy resin with bisphenol A, are summarized in Table 1.

Tale 1

| | Exp. 1 | Exp. 2 | Exp. 3 | Exp. 4 | Exp. 5 | Comp. Exp. 1 | Comp. Exp. 2 | Comp. Exp. 3 | Comp. Exp. 4 |
|---|---|---|---|---|---|---|---|---|---|
| Name of Epoxy resin and phenol resin | A | B | C | D | E | F | G | YD-014 | ZX-767 |
| Epoxy equivalent (g/eq) | 990 | 1550 | 1900 | 1620 | 2200 | 1750 | 1100 | 960 | 250,000 |
| Phenolic hydroxyl group equivalent (g/eq) | 1600 | 1940 | 1910 | 2020 | 1570 | 7000 | 1200 | 50,000 | 375 |
| Hydrolytic chlorine (wt%) | 0.01 | 0.008 | 0.015 | 0.018 | 0.003 | 0.003 | 0.20 | 0.003 | 0.023 |
| $\alpha$-diol (meq/100g) | 8 | 5 | 5 | 6 | 4 | 15 | 6 | 15 | 3 |

(continued)

| | Exp. 1 | Exp. 2 | Exp. 3 | Exp. 4 | Exp. 5 | Comp. Exp. 1 | Comp. Exp. 2 | Comp. Exp. 3 | Comp. Exp. 4 |
|---|---|---|---|---|---|---|---|---|---|
| X/Y ※1 | 0.6 | 0.8 | 1.0 | 0.8 | 1.4 | 0.2 | 1.0 | 0.02 | 670 |
| ※1 X: epoxy equivalent (g/eq)<br>Y: phenolic hydroxyl group equivalent (g/eq) | | | | | | | | | |

Example 6

To 100 parts of epoxy resin (A) obtained in Example 1, 0.5 parts of 2-methylimidasole as a curing accelerator, 50 parts of titanium oxide as a white pigment, 0.5 parts of Acronal 4F (product of BASF) as a flow control agent and 0.5 parts of benzoin as an anti-popping agent are blended. These components for blending are blended in dry condition by a Henshell mixer, then fuse kneading is carried out 1 time using an extruder (product of Ikegai Tekko; PCM-30) so as the temperature of resin to be 100-130°C, and after cooled down pulverized. Further, classified by a sieve of 100 mesh and powder coating is obtained. The obtained powder coating is coated on a mild steel plate, whose surface is treated by zinc phosphate, by electrostatic powder coating method and baked at 180°C for 20 minutes, and a coated test piece having approximately 80 μm film thickness is obtained.

Examples 7-9

By same blending ratio and by same operation to Example 6, except changing epoxy resin (A) to epoxy resin obtained in Examples 2-4, powder coatings and coated test pieces are obtained.

Examples 10

By same blending ratio and by same operation to Example 6, except changing epoxy resin (A) to 95 parts of epoxy resin (E) obtained in Example 5 and further blending 5 parts of EPOTOHTO YDCN-704 (product of Tohto Kasei Co., Ltd.; orthocresol novolac epoxy; epoxy equivalent 220g/eq), powder coating and coated test piece is obtained.

Comparative Examples 5 and 6

By same blending ratio and by same operation to Example 6, except changing epoxy resin (A) to epoxy resin (F) and epoxy resin (G) obtained in Comparative Examples 1-2, powder coatings and coated test pieces are obtained.

Comparative Example 7

By same blending ratio and by same operation to Example 6, except changing epoxy resin (A) to EPOTOHTO YD-014, powder coating and coated test piece are obtained.

Comparative Example 8

By same blending ratio and by same operation to Example 6, except changing epoxy resin (A) to 74 parts of EPOTOHTO YD-014, further blending 26 parts of phenolic curing agent: EPOTOHTO ZX-767, powder coating and coated test piece are obtained.

Comparative Example 9

By same blending ratio and by same operation to Example 8, except coarsely pulverized after first fuse kneading then carrying out 2$^{nd}$ fuse kneading by same condition, powder coating and coated test piece are obtained.

Comparative Example 10

By same blending ratio and by same operation to Example 6, except changing epoxy resin (A) to 74 parts of EPOTOHTO YD-014 of Comparative Example 3, further blending 2 parts of dicyandiamide (DICY) as a curing agent, powder coating and coated test piece are obtained.

Each test results are summarized in Table2. For bending resistance test, a test piece of zinc phosphate treated cold rolled steel sheet of 0.3×50 × 150mm size is used and for other tests a test piece of zinc phosphate treated cold rolled steel sheet of 0.8 × 70 × 150mm size is used.
Evaluations are carried out according to following methods.

1) Adhesion; Evaluated by lattice pattern tape cutting test prescript in JIS K-5400. Clearance; 1mm. Evaluation marks: perfect mark is 10.
2) Boiling water resistance; A test piece is soaked in boiling water for 4 hours, then the test piece is picked up and adhesion is evaluated.
3) Acid resistance; A test piece is soaked in 5% sulfuric acid for 30 days, then the test piece is picked up and adhesion is evaluated.
4) Alkali resistance; A test piece is soaked in 5% NaOH for 30 days, then the test piece is picked up and adhesion is evaluated.
5) Salt spray resistance; Cross cut is marked on a test piece and salt spray resistance test is carried out in accordance with JIS K-5400. After salt spray for 500 hours removed compulsorily using a cutter knife, one side removed width from cross cut part is measured. (O; less than 1mm, Δ; 1mm or more and less than 3mm, × ; 3mm or more)

Test results by above mentioned 5 tests are averaged value of 3 test pieces.
Following 3 tests are carried out on 10 test pieces and numbers of test pieces on which defects are not observed is recorded. Perfect mark is 10.

6) Erichsen; Punch is pushed out by 10mm using an Erichsen tester and crack or removing of coated film are visually inspected.
7) Shock resistance; According to JIS K-5400, measured by Dupont shock testing machine. A shot pattern of 1/4 inch radius and a corresponding table are used and a weight of 1kg is dropped from 50cm height and crack or removing of coated film are visually inspected.
8) Bending resistance; According to JIS K-5400, evaluated by setting a core of 2mm in diameter to a bending test machine. Crack or removing of coated film are visually inspected.4

Table 2

| | | Example | | | | | Comparative Example | | | | | |
|---|---|---|---|---|---|---|---|---|---|---|---|---|
| No. | | 6 | 7 | 8 | 9 | 10 | 5 | 6 | 7 | 8 | 9 | 10 |
| Name of epoxy resin and phenol resin | A | 100 | - | - | - | - | - | - | - | - | - | - |
| | B | - | 100 | - | - | - | - | - | - | - | - | - |
| | C | - | - | 100 | - | - | - | - | - | - | - | - |
| | D | - | - | - | 100 | - | - | - | - | - | - | - |
| | E | - | - | - | - | 95 | - | - | - | - | - | - |
| | F | - | - | - | - | - | 100 | | - | - | - | - |
| | G | - | - | - | - | - | - | 100 | - | - | - | - |
| | YD-014 | - | - | - | - | - | - | - | 100 | 74 | 74 | 98 |
| | ZX-767 | - | - | - | - | - | - | - | - | 26 | 26 | - |
| | YDCN-704 | - | - | - | - | - | - | - | - | - | - | - |
| | DICY | - | - | - | - | - | - | - | - | - | - | 2 |
| X/Y ※2 | | 0.6 | 0.8 | 1.0 | 0.8 | 0.9 | 0.2 | 1.0 | 0.02 | 0.9 | 0.9 | - |
| 2-methylimidasole | | 0.5 | 0.5 | 0.5 | 0.5 | 0.5 | 0.5 | 0.5 | 0.5 | 0.5 | 0.5 | 0.5 |
| titanium oxide | | 50 | 50 | 50 | 50 | 50 | 50 | 50 | 50 | 50 | 50 | 50 |
| Acronal 4F | | 0.5 | 0.5 | 0.5 | 0.5 | 0.5 | 0.5 | 0.5 | 0.5 | 0.5 | 0.5 | 0.5 |
| benzoin | | 0.5 | 0.5 | 0.5 | 0.5 | 0.5 | 0.5 | 0.5 | 0.5 | 0.5 | 0.5 | 0.5 |

(continued)

| | Example | | | | | Comparative Example | | | | | |
|---|---|---|---|---|---|---|---|---|---|---|---|
| No. | 6 | 7 | 8 | 9 | 10 | 5 | 6 | 7 | 8 | 9 | 10 |
| kneading times (times) | 1 | 1 | 1 | 1 | 1 | 1 | 1 | 1 | 1 | 1 | 1 |
| adhesion | 10 | 10 | 10 | 10 | 10 | 10 | 4 | 10 | 10 | 10 | 10 |
| boiling water resistance | 8 | 10 | 10 | 10 | 10 | 8 | 0 | 10 | 6 | 10 | 0 |
| acid resistance | 10 | 10 | 10 | 10 | 10 | 8 | 0 | 2 | 6 | 10 | 0 |
| alkali resistance | 10 | 10 | 10 | 10 | 10 | 8 | 0 | 2 | 6 | 10 | 0 |
| salt spray test | ○ | ○ | ○ | ○ | ○ | ○ | × | Δ | × | ○ | × |
| Erichsen | 10 | 10 | 10 | 10 | 10 | 4 | 0 | 5 | 8 | 10 | 5 |
| shock resistance | 9 | 10 | 9 | 10 | 9 | 0 | 0 | 0 | 5 | 8 | 5 |
| bending resistance | 10 | 10 | 10 | 10 | 10 | 0 | 0 | 0 | 4 | 8 | 7 |
| ※X: epoxy equivalent after blended (g/eq) (calculated value)<br>Y: phenolic hydroxyl group equivalent (g/eq) (calculated value) | | | | | | | | | | | |

Regarding epoxy resin (B) obtained in Example 2 and epoxy resin (EPOTOHTO YD-014) of Comparative Example 1, HPLC chart and FD-MS spectrum are measured and results are shown in Figs. 1-4.

Measuring method of HPLC chart

(apparatus for analyzing)
High performance liquid chromatography system of HEWLWETT PACKARD: SERIES 1100
Detector: UV, detection wavelength: 280nm
Column : ϕ 4.6mm × 150mm CD-C18 (product of Imtact)
(condition for analyzation)
Mobile phase:

A solution: distilled water
B solution: tetrahydrofurane/acetonitlile=50/50 (ratio by volume)
Initial constitution: A solution/B solution=50/50 (ratio by volume)
Gradient (after 50 minutes): A solution/B solution=0/100 (ratio by volume)

Flow rate: 1ml/minute
Adding volume: 5 μl
Column Temperature: 40°C

Measuring method of FD-MS spectrum

Apparatus: Double-focusing mass spectrometer, Hitachi-80B
Field desorption analyzing method (FD-MS)
FD: Carbon emitter
Resolvability: 1500
Magnetic field sweeping speed: m/z0-1500/8.0sec
Accelerating voltage: 3kv
Emitter heating current: 0 - 35mA/600sec.
Magnetic field proofreading: perfluorokerosen (PFK) by EI inonization method is used.
Calibration curve: polyethylene glycol

INDUSTRIAL APPLICABILITY

Epoxy resin of the present invention contains phenolic hydroxyl group which is effective for curing, and is not necessary to produce epoxy resin and phenolic curing agent individually. Therefore, a problem caused by uneven mixing with a curing agent can be avoided, accordingly a cured product with very few defects can be obtained. A cured product obtained from epoxy resin composition of the present invention is characterized to reproduce a product having same properties such as adhesion, flexibility or shock resistance.

## Claims

**1.** Epoxy resin represented by general formula ( I ),

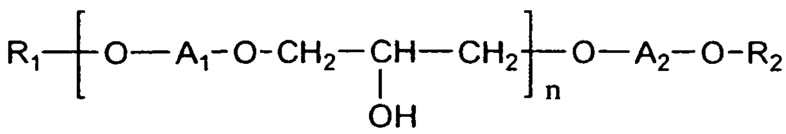

general formula ( I )

wherein n is an integer of 0 or more,
$A_1$ and $A_2$ are residue of divalent phenol, and $A_1$ and $A_2$ can be same or can be different and both $R_1$ and $R_2$ are H or

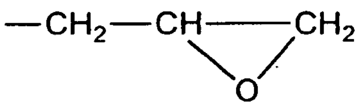

,

which is synthesized from divalent phenol and epihalohydrine, and satisfies numerical formula (1),

$$0.3 \leqq X/Y \leqq 2.0 \qquad \text{formula (1)}$$

wherein,

X; epoxy equivalent (g/eq)
Y; phenolic hydroxyl group equivalent (g/eq)

further, amount of hydrolytic halogen is 0.05 wt.% or less.

**2.** Epoxy resin of claim 1, wherein divalent phenols is bisphenols.

**3.** Epoxy resin of claim 1 or claim 2, wherein epoxy equivalent of the resin is 3000g/eq or less and phenolic hydroxyl group equivalent of the resin is 5000g/eq or less.

**4.** A method for production of the epoxy resin according to any one of claims 1 to 3 comprising, reacting from 0.8 mole to 1.3 mole of epihalohydrine to 1 mole of divalent phenols under the existence of alkali metal hydroxide.

**5.** The method for production of epoxy resin of claim 4, wherein total amount of alkali metal hydroxide existing to 1 mole of epihalohydrine is from 0.98 mole to 0.5 mole.

**6.** Epoxy resin composition comprising, containing epoxy resin according to anyone of claims 1 to 5 as an essential component.

**Patentansprüche**

1. Epoxidharz, dargestellt durch die allgemeine Formel (I),

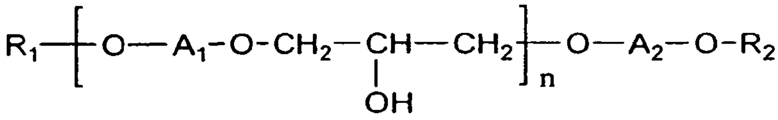

allgemeine Formel (I)

wobei n eine ganze Zahl von 0 oder mehr ist,
$A_1$ und $A_2$ der Rückstand von zweiwertigem Phenol sind, und $A_1$ und $A_2$ gleich oder unterschiedlich sein können, und
sowohl $R_1$ als auch $R_2$ H oder

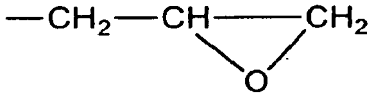

sind, das aus zweiwertigem Phenol und Epihalohydrin synthetisiert wird und die numerische Formel (1) erfüllt,

$$0{,}3 \leq X/Y \leq 2{,}0 \qquad \text{Formel (1)}$$

wobei

X Epoxidäquivalent (g/eq)
Y Äquivalent phenolischer Hydroxylgruppe (g/eq)

und ferner der Anteil an hydrolytischem Halogen 0,05 Gew.-% oder weniger beträgt.

2. Epoxidharz nach Anspruch 1, wobei das zweiwertige Phenol Bisphenol ist.

3. Epoxidharz nach Anspruch 1 oder Anspruch 2, wobei das Epoxidäquivalent des Harzes 3000 g/eq oder weniger ist und das Äquivalent phenolischer Hydroxylgruppe des Harzes 5000 g/eq oder weniger ist.

4. Verfahren zur Herstellung des Epoxidharzes nach einem der Ansprüche 1 bis 3, umfassend die Reaktion von 0,8 Mol bis 1,3 Mol Epihalohydrin zu 1 Mol zweiwertigem Phenol in Gegenwart von Alkalimetallhydroxid.

5. Verfahren zur Herstellung von Epoxidharz nach Anspruch 4, wobei der Gesamtanteil des vorhandenen Alkalimetallhydroxids auf 1 Mol Epihalohydrin zwischen 0,98 Mol und 0,5 Mol beträgt.

6. Epoxidharzverbindung, umfassend das Epoxidharz nach einem der Ansprüche 1 bis 5 als wesentlichen Bestandteil.

**Revendications**

1. Résine époxy représentée par la formule générale (I),

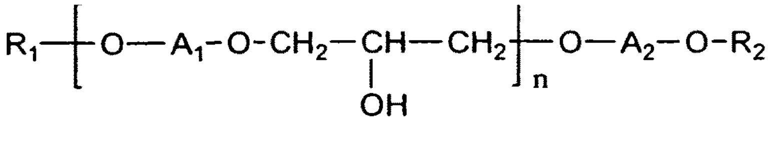

formule générale (I)

dans laquelle n est un nombre entier, 0 ou plus,
$A_1$ et $A_2$ sont des résidus de phénol divalent et $A_1$ et $A_2$ peuvent être les mêmes ou différents et
$R_1$ et $R_2$ sont tous deux H ou

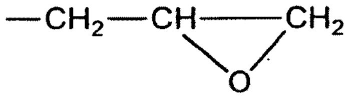
,

qui est synthétisé à partir de phénol divalent et d'épihalohydrine et qui satisfait à la formule numérique (1),

$$0.3 \leqq X/Y \leqq 2.0 \quad \text{formule (1)}$$

dans laquelle

X est un équivalent époxy (g/eq)
Y est un équivalent de groupe hydroxyle phénolique (g/eq)

de plus la quantité d'hydrogène par hydrolyse est de 0,05 % en poids ou inférieure.

**2.** Résine époxy selon la revendication 1 dans laquelle les phénols divalents sont des bisphénols.

**3.** Résine époxy selon la revendication 1 ou la revendication 2 dans laquelle l'équivalent époxy de la résine est 3000 g/eq ou inférieur et l'équivalent de groupe hydroxyle phénolique de la résine est 5000 g/eq ou inférieur.

**4.** Procédé de production de la résine époxy selon l'une quelconque des revendications 1 à 3 comprenant la réaction de 0,8 mole à 1,3 mole d'épihalohydrine à 1 mole de phénols divalents en présence d'hydroxyde de métal alcalin.

**5.** Procédé de production de la résine époxy selon la revendication 4, la quantité totale d'hydroxyde de métal alcalin existant pour 1 mole d'épihalohydrine étant de 0,98 mole à 0,5 mole.

**6.** Composition de résine époxy comprenant, contenant de la résine époxy selon l'une quelconque des revendications 1 à 5 comme composant essentiel.

Fig.1

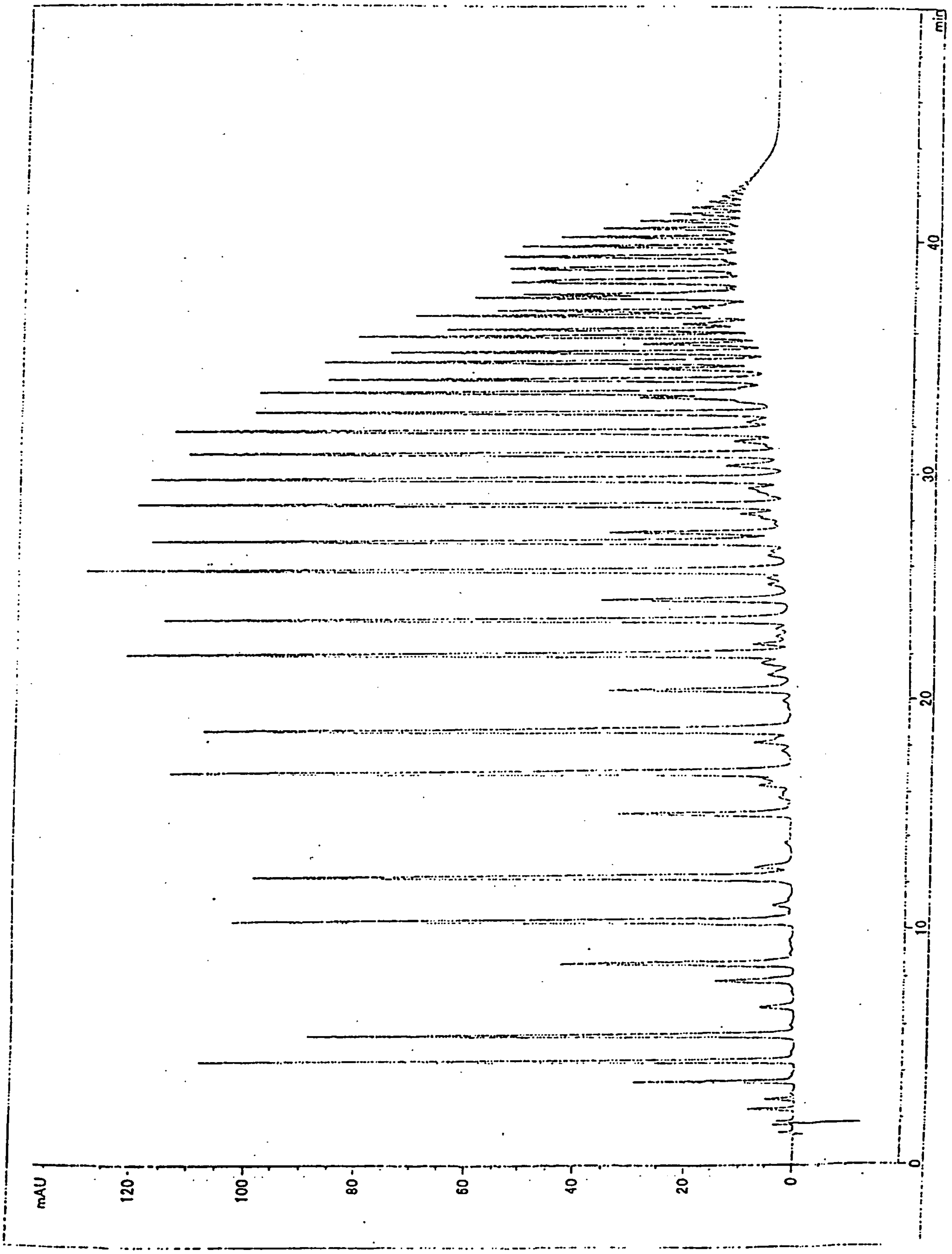

Fig.2

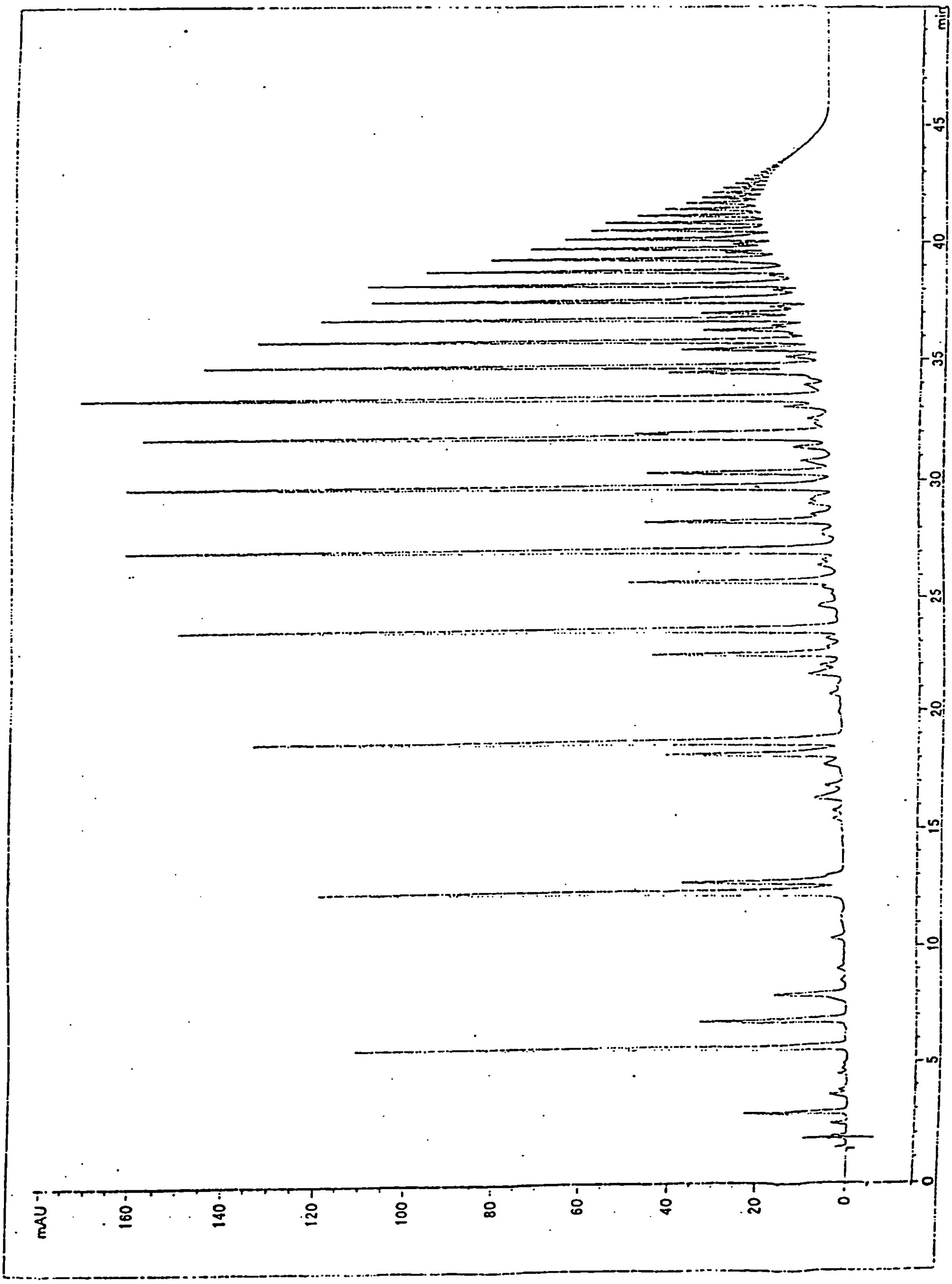

Fig.3

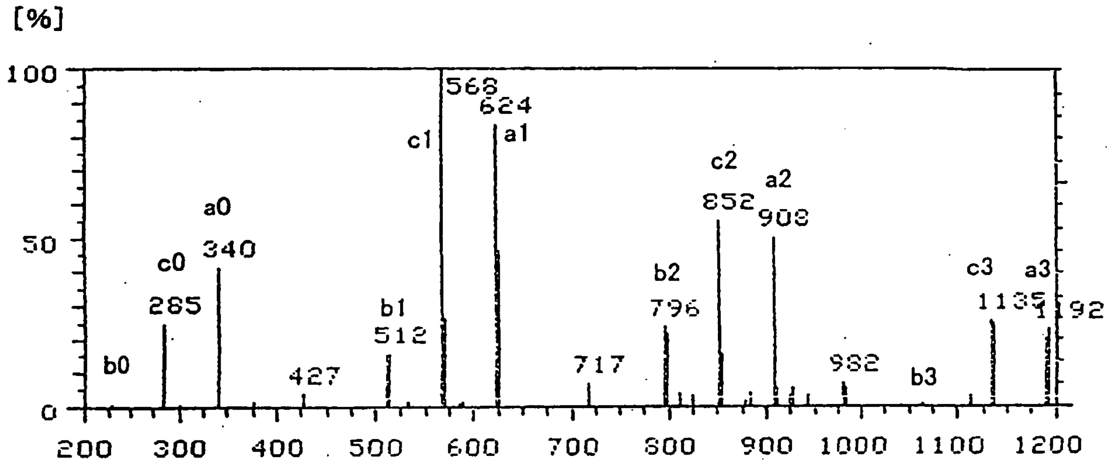
[%]
100
50
0
200 300 400 500 600 700 800 900 1000 1100 1200
b0
c0
285
a0
340
427
b1
512
c1
568
624
a1
717
b2
796
c2
852
a2
908
982
b3
c3
1135
a3
1192

Fig.4

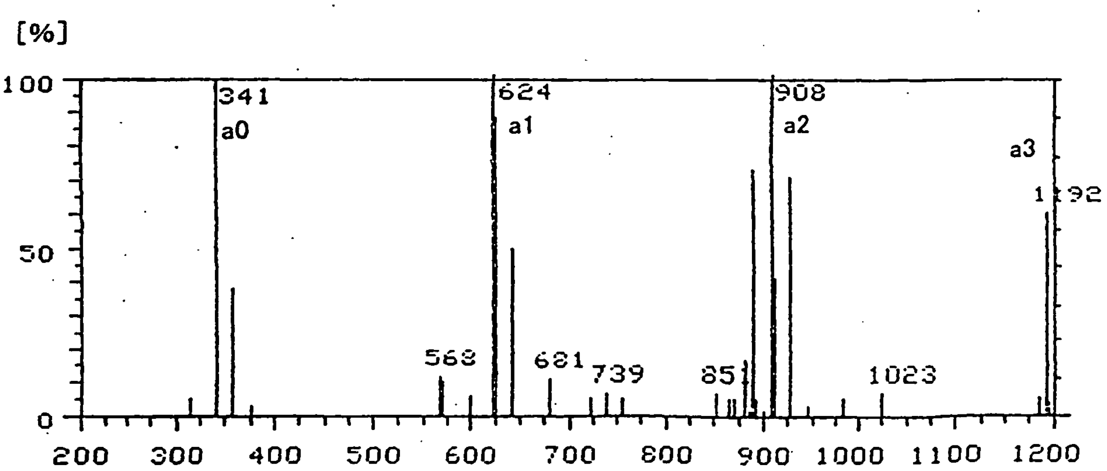
[%]
100
50
0
200 300 400 500 600 700 800 900 1000 1100 1200
341
a0
568
624
a1
681
739
851
908
a2
1023
a3
1192

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S547437 A
- JP 2654796 B